# EUROPÄISCHE PATENTANMELDUNG

(11) **EP 4 230 025 A1**
(43) Veröffentlichungstag der Anmeldung: **23.08.2023**
(21) Anmeldenummer: 22215070.8
(22) Anmeldetag: 20.12.2022
(51) Int. Cl.: A01F 12/10, A01F 12/44, A01F 12/30

(54) **SELBSTFAHRENDER MÄHDRESCHER**

(30) Priorität: 21.02.2022 DE 102022103974
(71) Anmelder: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE); Diekamp, Andreas, 49176 Hilter (DE)
(74) Vertreter: CLAAS Gruppe

(57) **Zusammenfassung**

Die Erfindung betrifft einen selbstfahrenden Mähdrescher (1), umfassend eine tangentiale Drescheinrichtung (2) sowie eine axiale Trenneinrichtung (3), wobei die Drescheinrichtung (2) eine tangentiale Vortrommel (4), eine in Strömungsrichtung eines Erntegutstroms der Vortrommel (4) nachgeschaltete tangentiale Dreschtrommel (5) sowie einen sowohl die Vortrommel (5) als auch die Dreschtrommel (5) zumindest bereichsweise ummantelnden Abscheidekorb (6) aufweist. Hierbei ist die Trenneinrichtung (3) in Strömungsrichtung des Erntegutstroms betrachtet der Drescheinrichtung (2) nachgeschaltet und umfasst mindestens einen axialen Trennrotor (7, 8).

Erfindungsgemäß ist vorgesehen, dass der Abscheidekorb (6) in einem der Trenneinrichtung (3) zugewandten Endbereich ein Korbsegment (9) umfasst, das an ein der Drescheinrichtung (2) zugewandtes Ende eines Einlaufkopfs (10) der Trenneinrichtung (3) anschließt, sodass der Erntegutstrom von der Drescheinrichtung (2) unmittelbar an die Trenneinrichtung (3) übergebbar ist. Weiterhin umfasst der Einlaufkopf (10) mindestens einen in Querrichtung des Mähdreschers (1) betrachtet mittig angeordneten Gutstromteiler (11), mittels dessen ein von der Drescheinrichtung (2) an die Trenneinrichtung (3) übergebener Erntegutstrom teilbar ist.

## Beschreibung

Die Erfindung betrifft einen selbstfahrenden Mähdrescher gemäß dem Anspruch 1.

Ein Mähdrescher ist eine landwirtschaftliche Erntemaschine zum Mähen und anschließendem Dreschen von auf einem Feld wachsenden Erntegut. Mittels des Mähdreschers werden beispielsweise Getreide- oder Samenkörner gedroschen, das heißt von dem restlichen Erntegut, beispielsweise in Form von Stroh, separiert. Außerdem kommt der Mähdrescher zur Reinigung von Körnern und Samen von Spreu sowie zur Ablage des Strohs in Schwaden zur späteren Bergung als Einstreu zum Einsatz. Alternativ werden die Erntegutreste mittels eines Häckselorgans des Mähdreschers gehäckselt und flächig zur Naturdüngung auf dem Feld verteilt.

Ein derartiger Mähdrescher kann ein Schneidwerk umfassen, mittels dessen das auf dem Feld wachsende Erntegut abgeschnitten aufgenommen wird. Außerdem kann der Mähdrescher einen Schrägförderer aufweisen, mittels dessen das geerntete Erntegut von dem Schneidwerk übernommen und in Richtung der einer Drescheinrichtung abtransportiert wird. Jedenfalls umfasst der Mähdrescher eine tangentiale Drescheinrichtung sowie eine axiale Trenneinrichtung, wobei - für den Fall, dass ein Schrägförderer vorhanden ist - die Drescheinrichtung derart mit dem Schrägförderer in Verbindung steht, dass diese von dem Schrägförderer mit Erntegut beschickt wird. Die tangentiale Drescheinrichtung umfasst eine tangentiale Vortrommel sowie eine tangentiale Dreschtrommel, wobei Längsachsen beider Trommeln bzw. deren Wellen zumindest im Wesentlichen quer zu einer Längsrichtung des Mähdreschers ausgerichtet sind. Dementsprechend werden die Trommeln im Zuge einer Förderung des Ernteguts in Längsrichtung des Mähdreschers von vorne nach hinten tangential bezogen auf einen gedachten, von der jeweiligen Trommel definierten Rotationszylinder mit Erntegut beschickt. Die axiale Trenneinrichtung ist dementsprechend zumindest im Wesentlichen parallel zu der Längsrichtung des Mähdreschers orientiert.

Die Vortrommel ist in Strömungsrichtung eines Erntegutstroms der Dreschtrommel vorgeschaltet. Ferner weist der Mähdrescher einen sowohl die Vortrommel als auch die Dreschtrommel zumindest bereichsweise ummantelnden Abscheidekorb auf. Dadurch, dass die Vortrommel und die Dreschtrommel drehangetrieben werden und somit das Erntegut insbesondere in radiale Richtung wegschleudern würden, ist es nötig, dieses mittels des Abscheidekorbs aufzufangen. Der Erntegutstrom wird somit in einem Dreschspalt geführt, der sich zwischen der jeweiligen Trommel und dem Abscheidekorb erstreckt. Der Abscheidekorb ist dabei derart beschaffen, dass bereits ein wesentlicher Teil der von den Pflanzenresten abgetrennten Körner unmittelbar durch den Abscheidekorb noch im Bereich der Drescheinrichtung zwecks Sammlung, insbesondere in einem Korntank, abgeschieden wird.

Weiterhin ist die Trenneinrichtung in Strömungsrichtung des Erntegutstroms betrachtet der Drescheinrichtung nachgeschaltet und umfasst mindestens einen axialen Trennrotor. Mit anderen Worten wird das Erntegut zuerst vom Feld aufgenommen, sodann mittels des Schrägförderers an die Vortrommel und die Dreschtrommel übergeben, mittels der es gedroschen wird, und anschließend an die Trenneinrichtung weitergeleitet, mittels der das Erntegut getrennt wird, wobei nach Möglichkeit die gewünschten Körner von unerwünschten Pflanzenresten getrennt werden. Hierfür ist typischerweise eine Zuführtrommel vorgesehen, die der Dreschtrommel nachgeschaltet ist und das gedroschene Erntegut an die Trenneinrichtung übergibt.

Dem Stand der Technik sind derartige Mähdrescher in vielfältiger Ausgestaltung als bekannt zu entnehmen. Beispielsweise ist der DE 35 37 959 C2 ein selbstfahrender Mähdrescher mit vorderer Gutzuführung und einer im Axialfluss arbeitenden sich in Längsrichtung des Mähdreschers erstreckenden Trenneinrichtung, die aus zumindest einem Rotor und einem diesen umschließenden mit einer Aufgabe- und einer Auslassöffnung versehenen Siebmantelgehäuse besteht, als bekannt zu entnehmen. Dieses Siebmantelgehäuse ist in seinem oberen Bereich mit parallel zueinander und wendelförmig verlaufenden inneren Leitschienen versehen. Hierbei sind Auflaufenden der Leitschienen mindestens zweier Leitschienengruppen in Laufrichtung der Schienen zueinander versetzt angeordnet. Der Mähdrescher umfasst eine im Tangentialfluss arbeitende Drescheinrichtung, die eine Dreschtrommel und einen Dreschkorb umfasst. Hierbei wird das in dieser Drescheinrichtung ausgedroschene Stroh von der Dreschtrommel in die Aufgabeöffnung eines Siebmantelgehäuses geschleudert. Dieses umgibt einen mit Leisten besetzten Trennrotor, wobei dieser im Bereich der Aufgabeöffnung konisch ausgebildet und mit einem Einzugsschneckenblech besetzt ist.

Nachteilig bei dem vorgenannten Stand der Technik ist, dass die Durchsatzleistung gering ist. Außerdem sind die dem Stand der Technik bekannten Mähdrescher sehr lang, da insbesondere die axiale Trenneinrichtung sehr lang sein muss, um ein gutes Trennergebnis zu erzielen. Dies ist insbesondere dadurch bedingt, dass das Erntegut mittels der Zuführtrommel in die Trenneinrichtung hineingeworfen wird, mithin derart, dass nicht eine gesamte Länge der Trenneinrichtung genutzt werden kann. Mit anderen Worten wird das Erntegut so weit in die Trenneinrichtung hineingeworfen, dass ein Bereich der Trenneinrichtung, der an die Zuführtrommel angrenzt, nicht oder nur mit sehr wenig Erntegut in Kontakt kommt. Somit erfolgt eine Umlenkung des Ernteguts von einer Bewegung in Längsachsrichtung des Mähdreschers in eine Rotation um eine Rotationsachse des jeweiligen Trennrotors spät. Hierdurch bedingt kann in diesem Bereich die Trenneinrichtung nicht ihrer zweckmäßigen Aufgabe, nämlich einem Trennen des Ernteguts nachkommen.

Es ist Aufgabe der vorliegenden Erfindung, die Nachteile des Stands der Technik zu beseitigen und einen Mähdrescher bereitzustellen, der eine besonders hohe Durchsatzleistung bereitstellen kann.

Die vorliegende Aufgabe wird durch einen selbstfahrenden Mähdrescher gemäß dem Anspruch 1 gelöst. Vorteilhafte Ausgestaltungen sind Gegenstand der Unteransprüche.

Es ist erfindungsgemäß vorgesehen, dass der Abscheidekorb in einem der Trenneinrichtung zugewandten Endbereich ein Korbsegment umfasst, das an ein der Drescheinrichtung zugewandtes Ende eines Einlaufkopfs der Trenneinrichtung anschließt, sodass der Erntegutstrom von der Drescheinrichtung unmittelbar an die Trenneinrichtung übergebbar ist. Hierbei ist vorgesehen, dass der Einlaufkopf mindestens einen in Querrichtung des Mähdreschers betrachtet mittig angeordneten Gutstromteiler umfasst, mittels dessen ein von der Drescheinrichtung an die Trenneinrichtung übergebener Erntegutstrom in insbesondere zwei Erntegutstromteile teilbar ist. Der Einlaufkopf bildet demzufolge ein in Richtung des Erntegutstroms betrachtet vorderes Ende der Trenneinrichtung. Die Trenneinrichtung kann beispielsweise zumindest im Wesentlichen röhrenförmig ausgebildet sein und insbesondere zwei Trennrotoren, einen je Röhre, umfassen. Der Gutstromteiler ist in diesem Zusammenhang derart an dem Einlaufkopf angeordnet, dass er das Erntegut aufteilen und somit jeweils eine der Röhren bzw. einen der Trennrotoren beschicken kann. Diese Variante ist auch Gegenstand der Unteransprüche.

Mittels des erfindungsgemäßen Mähdreschers ist es möglich, das Erntegut von der Vortrommel und Dreschtrommel unmittelbar, das heißt insbesondere ohne eine zusätzliche Zuführtrommel, der Trenneinrichtung zuzuleiten. Mit anderen Worten leitet beziehungsweise führt das Korbsegment das Erntegut in die Trenneinrichtung hinein, insbesondere in einen vorderen Bereich derselben. Weiterhin kann mittels des Gutstromteilers der Erntegutstrom geteilt werden, sodass dieser vorteilhafterweise besonders gleichmäßig an die Trenneinrichtung übergeben werden kann. In diesem Zusammenhang ist es insbesondere denkbar, dass die Trenneinrichtung zwei Trennrotoren aufweist, wobei der Gutstromteiler derart angeordnet ist, dass jedem Trennrotor zumindest im Wesentlichen ein betragsmäßig gleich großer Erntegutstromteil zugeführt wird.

Durch die vorgenannte Ausgestaltung ergibt sich der Vorteil, dass das Erntegut der Trenneinrichtung besonders zielgenau und gleichmäßig zugeführt werden kann, sodass diese besonders effizient betrieben werden kann. Insbesondere kann das Erntegut über das Korbsegment, das an den Einlaufkopf anschließt, von unten her, das heißt in Form einer aufwärts gerichteten Bewegung, der Trenneinrichtung zugeführt werden, wobei der mindestens eine Trennrotor das Erntegut unmittelbar übernehmen und bearbeiten kann. Die Trenneinrichtung wird auf diese Weise effizienter genutzt als im Stand der Technik, da der der jeweilige Trennrotor besser ausgenutzt wird.

Weiterhin ist es durch die erfindungsgemäße Ausgestaltung möglich, die Trenneinrichtung länger auszugestalten, da gegenüber dem Stand der Technik die Zuführtrommel nicht benötigt wird und somit deren Bauraum zur Verfügung steht. Mit anderen Worten ist es möglich, die Trenneinrichtung zu verlängern, ohne insgesamt den Mähdrescher verlängern zu müssen. Durch die längere Trenneinrichtung lässt sich insgesamt die Trennleistung der Trenneinrichtung verbessern, was wiederum zu einer höheren Durchsatzleistung führt.

Weiterhin ergibt sich der besondere Vorteil, dass infolge des Weglassens der Zuführtrommel die für diese Trommel ansonsten notwendige Antriebsleistung eingespart wird. Daher ist der Mähdrescher im Vergleich zum Stand der Technik effizienter betreibbar.

Schließlich wird infolge des Weglassens der Zuführtrommel der Körnerbruch gegenüber dem Stand der Technik reduziert, wodurch die Produktivität des Mähdreschers erhöht wird, da bei gleicher Menge geernteten Erntegut ein höherer Ertrag verwertbarer Körner generiert wird.

Gemäß einer besonders vorteilhaften Ausgestaltung ist vorgesehen, dass sich der Gutstromteiler bis an einen dem Abscheidekorb zugewandten Rand des Einlaufkopfs erstreckt. Der Gutstromteiler schließt somit besonders nah, insbesondere zumindest im Wesentlichen lückenlos, an dem Rand des Einlaufkopfs ab. Auf diese Weise kann der Erntegutstrom unmittelbar bei seinem Übergang von dem Korbsegment an die Trenneinrichtung mittels des Gutstromteilers beeinflusst und verteilt werden, beispielsweis auf zwei Röhren der Trenneinrichtung. Hierdurch ergibt sich der Vorteil, dass der Einlaufkopf besonders günstig in Eingriff mit dem eingeleiteten Erntegut kommt. Hierdurch wird insbesondere verhindert, dass sich in einem Bereich des Einlaufkopfes Verstopfungen und/oder Ansammlungen von Erntegut ergeben, die zu einer Behinderung des Erntegutflusses im Bereich des Einlaufkopfes führen können. Durch die vorgenannte Ausgestaltung kann dies verhindert werden, da nämlich das Erntegut besonders gleichmäßig und zielgenau zugeführt wird, sodass der Mähdrescher vorteilhafterweise besonders störungsunanfällig betrieben werden kann.

In einer weiteren besonders vorteilhaften Ausgestaltung ist vorgesehen, dass der Einlaufkopf zwei Zuführabschnitte aufweist, durch die hindurch der von der Drescheinrichtung übernommene Erntegutstrom dem mindestens einen Trennrotor zuführbar ist. Mit anderen Worten wird der Erntegutstrom mittels des Gutstromteilers in zwei Erntegutstromteile geteilt und diese sodann getrennt dem mindestens Trennrotor zugeführt. In Versuchen hat sich gezeigt, dass hierdurch eine besonders gute Umwälzung des Ernteguts realisiert werden kann. Dies hat den Vorteil, dass die Trenneinrichtung besonders effizient betrieben werden kann, sodass deren Durchsatzleistung besonders hoch ist.

Ein weiterer Vorteil ergibt sich dann, wenn die Trenneinrichtung zwei in Längsrichtung des Mähdreschers betrachtet nebeneinander angeordnete axiale Trennrotoren umfasst, wobei die Zuführabschnitte des Einlaufkopfs jeweils einem der Trennrotoren zugeordnet sind. Dadurch, dass der Erntegutstrom nicht von einem Trennrotor, sondern von zwei Trennrotoren behandelt wird, werden die jeweiligen Trennrotoren entsprechend weniger belastet. In diesem Zusammenhang kann der Erntegutstrom mittels des Gutstromteilers insbesondere in zwei zumindest im Wesentlichen gleiche Erntegutstromteile geteilt werden. Mit anderen Worten wird jedem der Trennrotoren zumindest im Wesentlichen ein gleich großer Massenstrom des Ernteguts zugeführt. Hierdurch kann eine Antriebsleistung der Trennrotoren reduziert werden, da je Trennrotor ein geringerer Erntegutstrom verarbeitet werden muss. Demzufolge muss je Trennrotor weniger Drehmoment bereitgestellt beziehungsweise aufgewendet werden, sodass die Trennrotoren mit einer höheren Drehzahl betrieben werden können. Dies hat zum Vorteil, dass die Durchsatzleistung der Trenneinrichtung besonders hoch ist und der Mähdrescher somit besonders durchsatzstark betrieben werden kann.

Weiterhin ist die Erfindung dann besonders vorteilhaft, wenn der Einlaufkopf einen Gutstromteiler aufweist, der mittig zwischen den Zuführabschnitten angeordnet ist, sodass der Erntegutstrom mittels des Gutstromteilers zu den beiden Zuführabschnitten hin teilbar ist. Auf diese Weise lässt sich der Erntegutstrom besonders einfach in zwei zumindest im Wesentlichen gleiche Erntegutstromteile teilen. Sofern mehrere Trennrotoren vorhanden sind, ist hierdurch der Vorteil gegeben, dass diese gleichmäßig mit Erntegut beschickt werden und somit zumindest im Wesentlichen gleich ausgelastet werden können.

Gemäß einer weiteren besonders vorteilhaften Ausgestaltung ist vorgesehen, dass der Gutstromteiler zumindest zwei in Strömungsrichtung des Erntegutstroms betrachtet aneinander anschließende Leitabschnitte aufweist, wobei eine in Querrichtung des Mähdreschers gemessene Breite des Gutstromteilers in dessen erstem Leitabschnitt, der sich in Strömungsrichtung des Erntegutstroms betrachtet vor dem zweiten Leitabschnitt befindet, zumindest im Wesentlichen, vorzugsweise vollständig, konstant ist und der Gutstromteiler sich in seinem zweitem Leitabschnitt in Strömungsrichtung betrachtet aufweitet. Mit anderen Worten ergeben die Leitabschnitte zusammengenommen eine Keilform, wobei eine Keilspitze (erster Leitabschnitt) gewissermaßen in den Erntegutstrom eingreift, mithin diesen "spaltet", und ein hinterer Keilbereich (zweiter Leitabschnitt) die tatsächliche seitliche Ablenkung der nunmehr getrennten Erntegutstromteile bewirkt. Auf diese Weise wird der Erntegutstrom besonders widerstandsarm geteilt und kann entlang einer Kontur insbesondere des zweiten Leitabschnittes geleitet werden. Hierdurch ergibt sich der Vorteil, dass der Erntegutstrom besonders leichtgängig geleitet werden kann und somit Verstopfungen beziehungsweise Blockaden besonders zuverlässig vermieden werden können.

Ein weiterer Vorteil ergibt sich dann, wenn mindestens ein Zuführabschnitt des Einlaufkopfs, vorzugsweise sämtliche Zuführabschnitte, einen rohrförmigen Ansatz aufweisen, an dessen innerer Mantelfläche mindestens ein Leitelement zur gerichteten Führung eines Erntegutstroms angeordnet ist. Durch diese Leitelemente innerhalb des rohrförmigen Ansatzes wird dem Erntegut bereits eine Rotationsbewegung um die Rotationsachse der Trenneinrichtung aufgeprägt. Demzufolge ist das Erntegut bereits unmittelbar bei Übergang des Erntegutstroms von der Drescheinrichtung zu der Trenneinrichtung in Rotation versetzt, wenn der Trennrotor mit diesem in Eingriff kommt. Hierdurch ergibt sich der Vorteil, dass der Trennrotor nicht so stark belastet wird und insbesondere weniger Drehmoment aufbringen muss, um das Erntegut zu beschleunigen. Zudem wird eine Länge des jeweiligen Trennrotors, entlang der das Erntegut bearbeitet wird, zumindest im Wesentlichen vollständig ausgenutzt. Mit anderen Worten wird mittels der Leitelemente der Erntegutstrom für die weitere Verarbeitung der Trenneinrichtung "vorbereitet", sodass es von dieser besonders einfach verarbeitet werden kann. Vorteilhafterweise lässt sich hierdurch ein besonders reibungsloser und verbrauchsarmer Betrieb des Mähdreschers bewerkstelligen.

Eine besonders vorteilhafte Ausgestaltung der Erfindung sieht vor, dass das mindestens eine Leitelement sich zumindest über einen Teilumfangsbereich des Ansatzes wendelförmig entlang der inneren Mantelfläche erstreckt. Die Leitelemente sind somit zumindest anteilig in Richtung des Erntegutflusses ausgerichtet. Hierdurch wird der Erntegutstrom besonders günstig in die Trenneinrichtung eingelenkt, sodass dieser besonders vorteilhaft von dem Trennrotor ergriffen werden kann. Insbesondere wird dem jeweiligen Erntegutstrom bereits im Bereich des Einlaufkopfs die für einen Trennrotor typische wendelförmige Bewegung des aufgeprägt, wodurch die Trennwirkung der Trenneinrichtung so gut wie möglich ausgenutzt wird.

Gemäß einer weiteren besonders vorteilhaften Ausgestaltung der Erfindung ist vorgesehen, dass der Abscheidekorb in seiner Ausrichtung relativ zu der Dreschtrommel änderbar ist. In Abhängigkeit beispielsweise von dem Erntegutstrom, also wie viel Erntegut pro Zeit befördert wird, kann es erforderlich sein, einen Abstand zwischen Dreschtrommel und Abscheidekorb zu verändern. In diesem Zusammenhang ist es denkbar, den Abstand zwischen Dreschtrommel und Abscheidetrommel zu vergrößern, wenn mehr Erntegut befördert wird, und den Abstand zu verringern, wenn weniger Erntegut befördert wird. Auf diese Weise kann die Arbeitsweise der Drescheinrichtung optimiert werden, da für das Erreichen einer optimalen Dreschleistung ein Dreschspalt zwischen der Dreschtrommel und dem Abscheidekorb möglichst voll gefüllt sein sollte, das heißt insbesondere nicht zu leer, ohne jedoch das Erntegut zu stark zwischen der Dreschtrommel und dem Abscheidekorb verdichten zu müssen, um den Erntegutstrom bearbeiten zu können. Hierdurch ergibt sich der Vorteil, dass der Mähdrescher besonders bedarfsgerecht betrieben werden kann.

In einer weiterhin besonders vorteilhaften Ausgestaltung ist das Korbsegment bündig an das der Drescheinrichtung zugewandte Ende des Einlaufkopfs angeschlossen. Dies hat zum Vorteil, dass das Erntegut besonders verlustfrei an die Trenneinrichtung weitergeleitet werden kann. Außerdem wird der Erntegutstrom nicht durch vorstehende oder rückspringende Kanten negativ beeinflusst.

Gemäß einer weiteren besonders vorteilhaften Ausgestaltung ist vorgesehen, dass die Vortrommel mindestens ein Leitelement umfasst, mittels dessen ein Erntegutstrom, der mittels der Vortrommel verarbeitet wird, teilbar ist. Die Vorteile sind bereits vorstehend genannt.

Die Erfindung ist nachstehend anhand eines Ausführungsbeispiels, das in den Figuren dargestellt ist, näher erläutert. Es zeigt:
- Fig. 1:: eine schematische Seitenansicht eines Mähdreschers gemäß dem Stand der Technik;
- Fig. 2:: eine schematische Schnittansicht einzelner Arbeitsorgane eines Mähdreschers gemäß dem Stand der Technik von der Seite;
- Fig. 3:: eine schematische Schnittansicht einzelner Arbeitsorgane eines erfindungsgemäßen Mähdreschers von der Seite;
- Fig. 4:: eine schematische Schnittansicht einer Drescheinrichtung;
- Fig. 5:: eine schematische Perspektivansicht der Drescheinrichtung und einer Trenneinrichtung;
- Fig. 6:: eine schematische Ansicht eines Einlaufkopfes;
- Fig. 7:: eine weitere schematische Ansicht des Einlaufkopfes;
- Fig. 8:: eine schematische Ansicht des Einlaufkopfes mit einem Gutstromteiler gemäß einer weiteren Ausgestaltung;
- Fig. 9:: eine schematische Draufsicht auf einen Teil des Einlaufkopfs; und
- Fig. 10:: eine schematische Draufsicht der Drescheinrichtung.

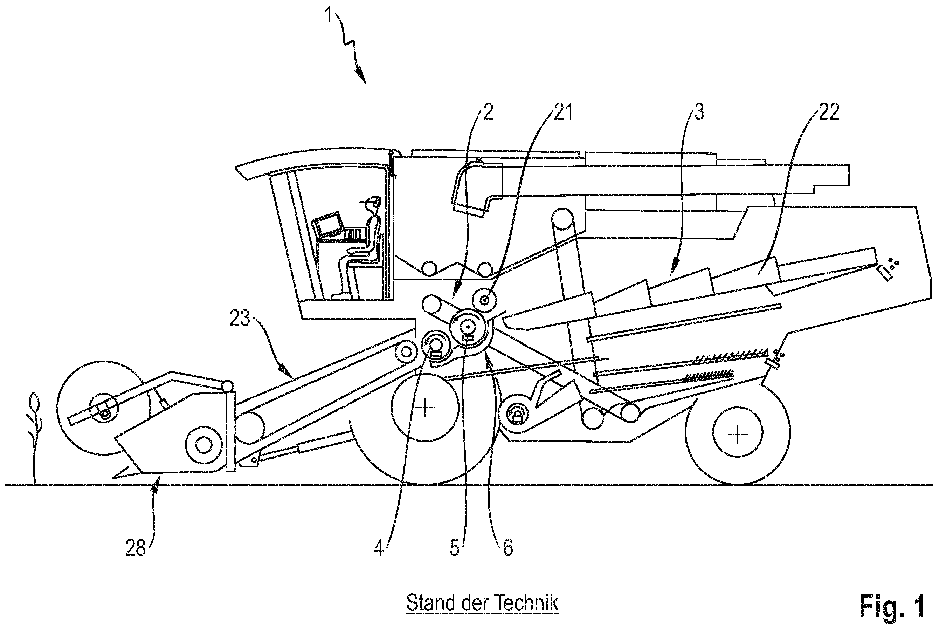

**Figur 1** zeigt in einer schematischen Seitenansicht einen Mähdrescher **1** gemäß dem Stand der Technik. Hierbei handelt es sich um einen selbstfahrenden Mähdrescher **1,** das heißt dieser weist einen Antrieb auf, mittels dessen der Mähdrescher **1** angetrieben werden kann.

Der Mähdrescher **1** ist dazu ausgebildet, auf einem Feld wachsendes Erntegut abzuschneiden, aufzunehmen und anschließend zu dreschen. In der Praxis handelt es sich bei dem Erntegut insbesondere um Getreide, wobei mittels des Mähdreschers **1** Körner aus den Ähren gedroschen werden und das Erntegut somit zumindest im Wesentlichen in Körner und Pflanzenreste, insbesondere Stroh, getrennt wird.

Hierfür umfasst der Mähdrescher **1** ein Schneidwerk **28,** mittels dessen das Erntegut abgeschnitten und aufgenommen werden kann. Außerdem weist der Mähdrescher **1** eine Drescheinrichtung **2** auf, die eine Vortrommel **4,** eine Dreschtrommel **5** und einen Abscheidekorb **6** umfasst. Wie in **Figur 1** erkennbar ist, ist das Schneidwerk **28** mittels eines Schrägförderers **23** derart mit der Vortrommel **4** verbunden, dass diese mit Erntegut beschickt wird. In Richtung eines Erntegutflusses ist die Vortrommel **4** vor der Dreschtrommel **5** angeordnet. Mit anderen Worten wird das Erntegut mittels des Schneidwerks **28** vom Feld übernommen und sodann mittels des Schrägförderers **23** zur Vortrommel **4** transportiert.

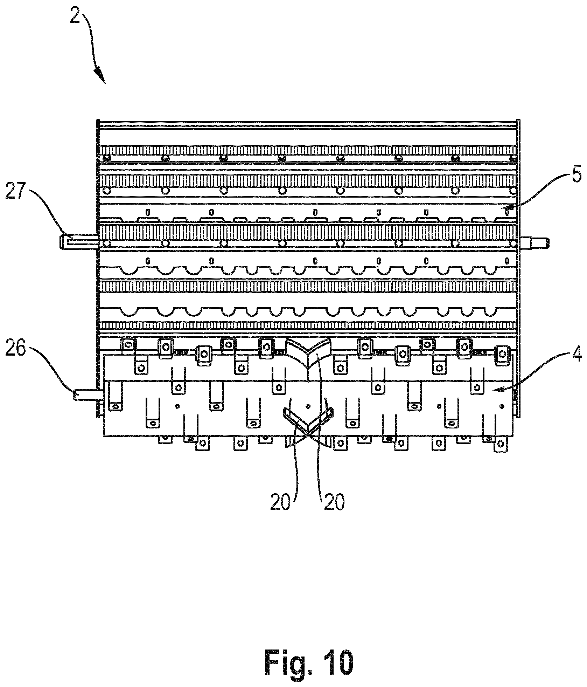

Während eines Betriebes werden sowohl die Vortrommel **4** als auch die Dreschtrommel **5** drehangetrieben, und zwar in dieselbe Richtung. Die Vortrommel **4** ist mittels einer Welle **26** gelagert, und in Strömungsrichtung des Ernteguts unmittelbar vor der Dreschtrommel **5** angeordnet, die ebenfalls mittels einer Welle **27** gelagert ist. Die Wellen **26, 27** sind parallel zueinander angeordnet, sodass die Vortrommel **4** und die Dreschtrommel **5** zusammenwirken. Dies ist in **Figur 10** erkennbar. Die Wellen **26, 27** sind quer zu einer Längsrichtung des Mähdreschers **1** orientiert, sodass sowohl die Vortrommel **4** als auch die Dreschtrommel **5** in eine auf ihre Rotation bezogen tangentiale Richtung mit dem Erntegutstrom beschickt werden. Entsprechend handelt es sich um eine tangentiale Vortrommel **4** und eine tangentiale Dreschtrommel **5.**

Hierbei wird bereits durch die Vortrommel **4** das Erntegut zumindest teilweise ausgedroschen, sodass die gelösten Körner durch den Abscheidekorb **6,** der sowohl die Vortrommel **4** als auch die Dreschtrommel **5** zumindest bereichsweise ummantelt, abgeschieden werden. Von der Vortrommel **4** wird das Erntegut an die Dreschtrommel **5** übergeben, in der es weiter und hauptsächlich ausgedroschen wird. Hierbei wird das Erntegut durch eine Rotation der Vortrommel **4** an die Dreschtrommel **5** übergeben.

Der Mähdrescher **1** gemäß dem Stand der Technik umfasst weiterhin eine Zuführtrommel **21,** wie in **Figur 1** erkennbar ist. Die Zuführtrommel **21** ist in Richtung des Erntegutflusses der Dreschtrommel **5** nachgeschaltet und dazu eingerichtet, das Erntegut von der Dreschtrommel **5** an die Trenneinrichtung **3** zu übergeben. Die Trenneinrichtung **3** weist bei dem hier gezeigten Mähdrescher **1** gemäß dem Stand der Technik einen Hordenschüttler **22** auf, wie in **Figur 1** erkennbar ist. Bei dem Mähdrescher **1** gemäß dem Stand der Technik erfolgt eine Abscheidung der Körner von dem restlichen Erntegut, das heißt den Pflanzenresten, mittels des Hordenschüttlers **22.** Die Körner werden hierbei von dem nicht vollständig ausgedroschenen Erntegut und dem Stroh getrennt und fallen nach unten ab.

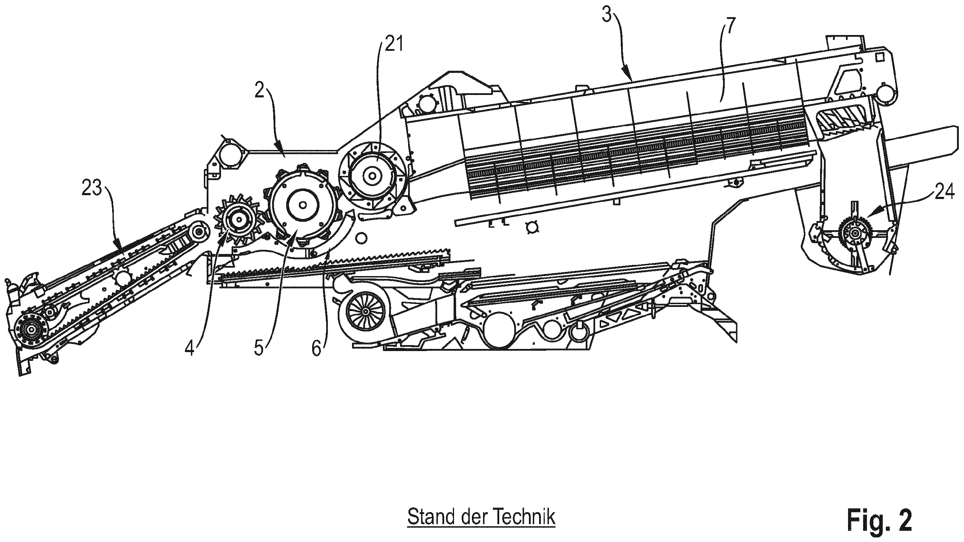

Alternativ zu der in **Figur 1** dargestellten Ausgestaltung gibt es gemäß dem Stand der Technik eine weitere Ausgestaltung, nämlich den sogenannten hybriden Mähdrescher, der in **Figur 2** veranschaulicht ist. Beim hybriden Druschsystem wird das Erntegut in der tangentialen Dreschtrommel **5** gedroschen und danach zu dem Trennrotor **7** geführt. Dies ist in **Figur 2** dargestellt. Der Trennrotor **7** hat gegenüber dem Hordenschüttler **22** den Vorteil, dass er eine wesentlich intensivere Trennung der gewünschten Körner von den unterwünschten Pflanzenresten ermöglicht und auf diese Weise Kornverluste verringert werden. Die verbleibenden Pflanzenreste werden an einem rückwärtigen Ende des Mähdreschers **1** einem Häcksler **24** zugeführt.

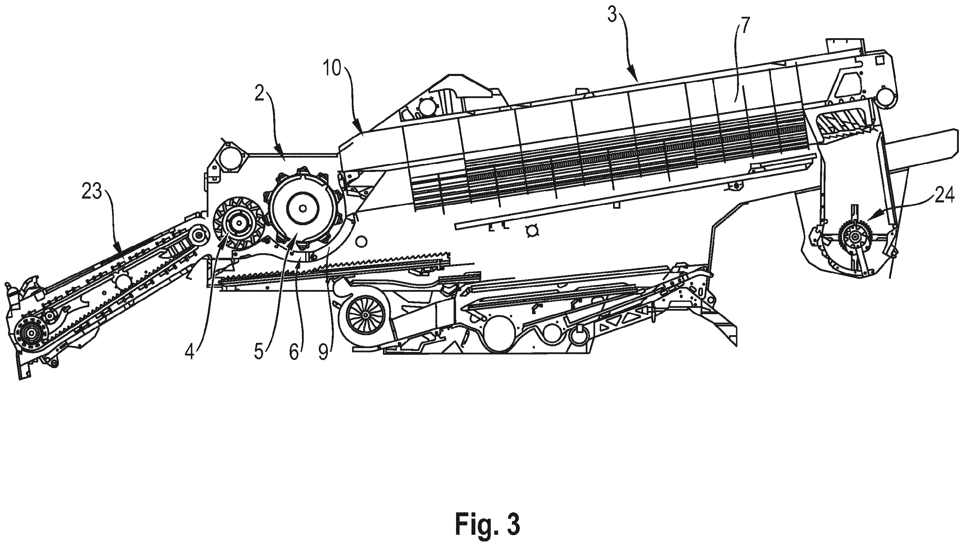

**Figur 3** zeigt in einer schematischen Schnittansicht von der Seite einen erfindungsgemäßen Mähdrescher **1.** In Zusammenschau mit **Figur 1** **und** **2** wird deutlich, dass der Mähdrescher **1** gemäß der erfindungsgemäßen Ausgestaltung keine Zuführtrommel **21** aufweist. Da die Zuführtrommel **21** bei Mähdreschern **1** gemäß dem Stand der Technik die Funktion innehat, das Erntegut der Trenneinrichtung **3** zuzuführen, wird diese Aufgabe erfindungsgemäß anderweitig gelöst.

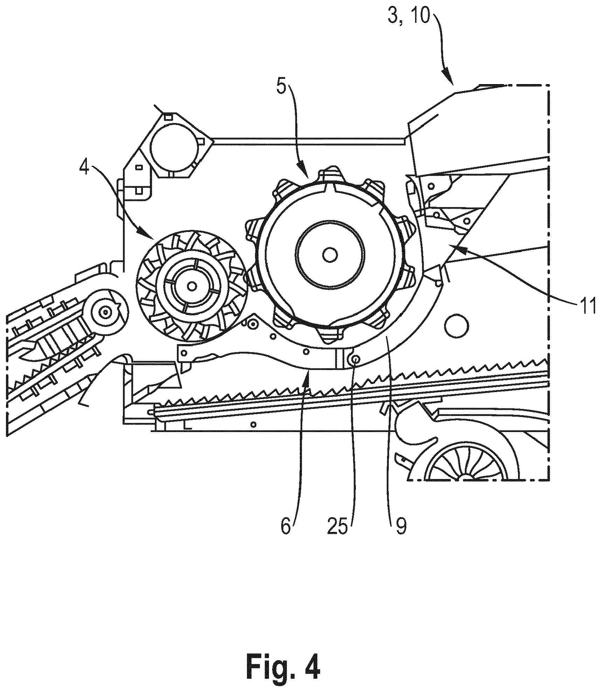

Hierbei ist vorgesehen, dass der Abscheidekorb **6** in einem der Trenneinrichtung **3** zugewandten Endbereich ein Korbsegment **9** umfasst, das an ein der Drescheinrichtung **2** zugewandtes Ende eines Einlaufkopfs **10** der Trenneinrichtung **3** anschließt, sodass der Erntegutstrom von der Drescheinrichtung **2** unmittelbar an die Trenneinrichtung **3** übergebbar ist. Mit anderen Worten kann das Erntegut mittels des Korbsegments **9** derart von der Dreschtrommel **5** weg geleitet werden, dass es in die Trenneinrichtung **3** eingeleitet werden kann. In diesem Zusammenhang ist es vorliegend außerdem vorgesehen, dass das Korbsegment **9** um eine Schwenkachse **25** schwenkbar gelagert ist. Die ist in **Figur 4** erkennbar. In Abhängigkeit beispielsweise von dem Erntegutstrom, also wie viel Masse von Erntegut pro Zeit verarbeitet wird, einer Beschaffenheit des Ernteguts, also beispielsweise wie feucht oder trocken dieses ist, oder abhängig von einer Art des Ernteguts ist es vorteilhaft, das Korbsegment **9** zu verschwenken. Hierbei wird das Korbsegment **9** derart verschwenkt, dass das Erntegut möglichst vollständig in die Trenneinrichtung **3** geleitet wird, das heißt insbesondere nicht über diese hinausgeworfen wird beziehungsweise oder/und nicht unter dieser herabfällt.

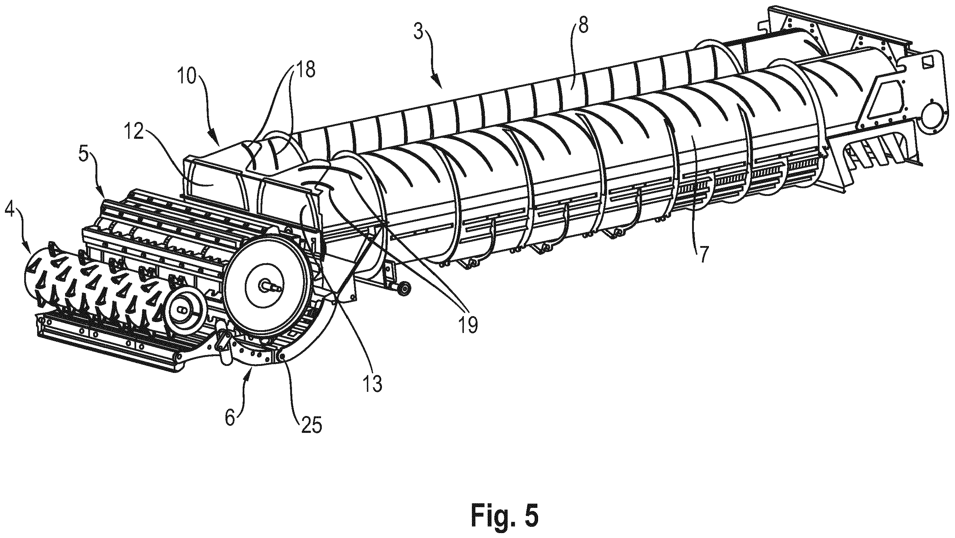

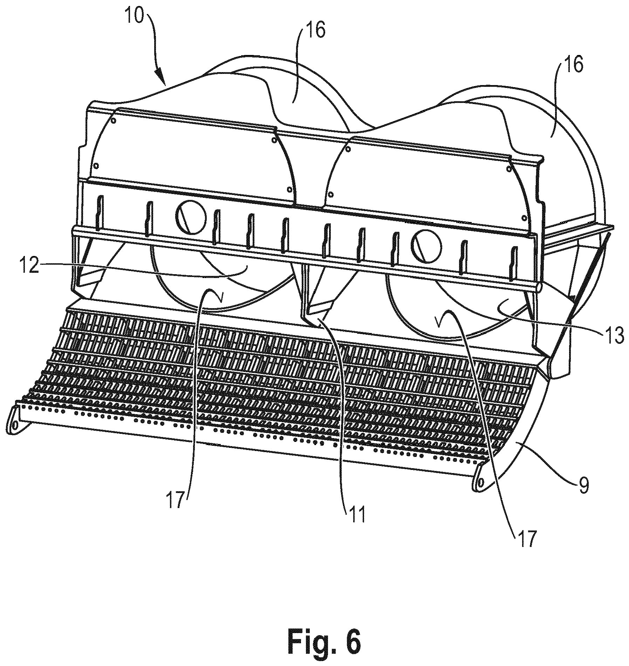

Weiterhin ist vorgesehen, dass der Einlaufkopf **10** mindestens einen in Querrichtung des Mähdreschers **1** betrachtet mittig angeordneten Gutstromteiler **11** umfasst, mittels dessen ein von der Drescheinrichtung **2** an die Trenneinrichtung **3** übergebener Erntegutstrom teilbar ist. Der Einlaufkopf **10** ist besonders gut in **Figur 6** erkennbar und mittels eines Ansatzes **16** an der Trenneinrichtung **3** anordbar. Wie **Figur 5** zeigt, weist der Mähdrescher **1** vorliegend zwei Trennrotoren **7, 8** auf, die sich parallel zueinander röhrenfömig in Längsrichtung des Mähdreschers **1** erstrecken. Demzufolge ist der Ansatz **16** zweigeteilt, das heißt jeder Teil ist jeweils an einen der Trennrotoren **7, 8** anordbar. Dies wird insbesondere in Zusammenschau der **Figuren 5** **und** **6** deutlich.

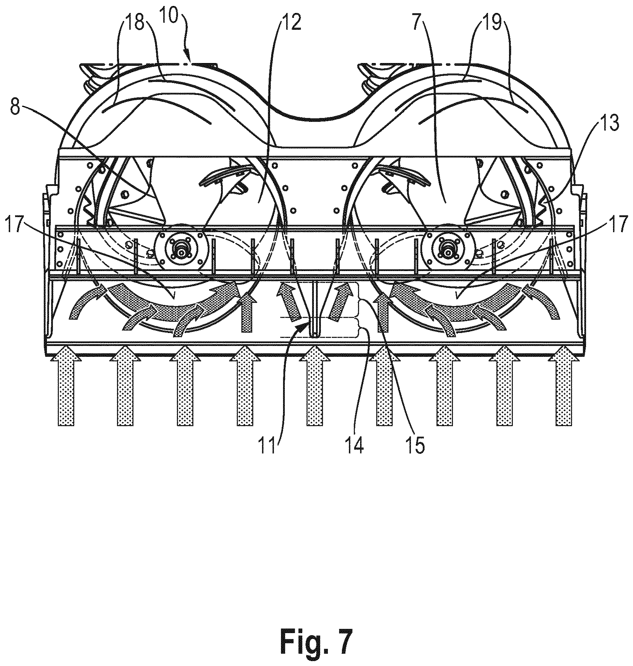

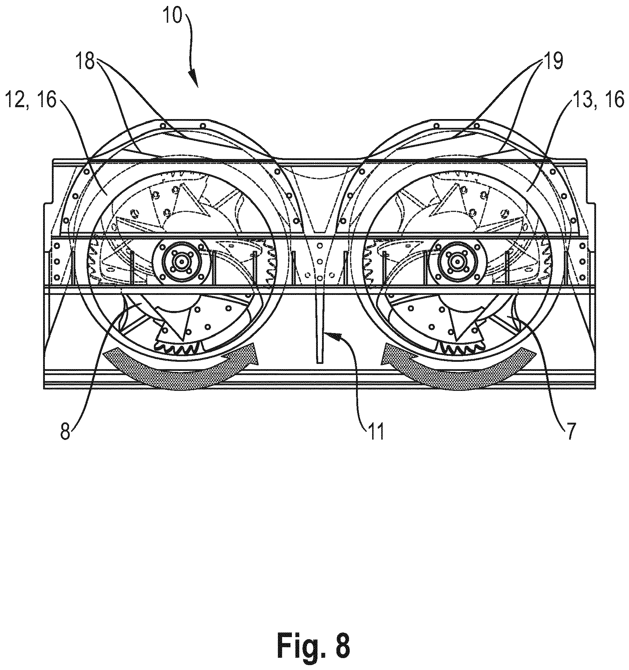

Wie insbesondere anhand der **Figuren 7** **und** **8** erkennbar ist, weist der Einlaufkopf **10** vorliegend zwei Zuführabschnitte **12, 13** auf, die zumindest im Wesentlichen zylindrisch ausgebildet sind. Demzufolge weist der Einlaufkopf **10** zwei innere Mantelflächen **17** auf, die sich zumindest im Wesentlichen zylindrisch erstrecken und an die übrige Trenneinrichtung **3** anschließen. Dies ist in Zusammenschau der **Figuren 5** **und** **6** erkennbar.

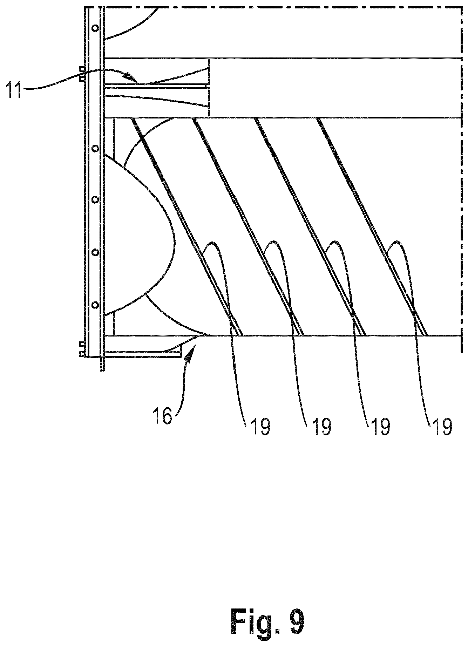

Weiterhin weist der Einlaufkopf **10** in einem oberen Bereich an der inneren Mantelfläche **17** Leitelemente **18, 19** auf. Dies ist in **Figur 5****,** **7****,** **8** und in **Figur 9** in einer schematischen Detailansicht dargestellt. Wie außerdem in **Figur 10** erkennbar ist, weist die Vortrommel **4** ebenfalls ein Leitelement **20** auf, mittels dessen der Erntegutstrom bereits im Bereich der Vortrommel **4** gewissermaßen "vorsortiert" wird. Das heißt, dass der Erntegutstrom bereits im Bereich der Vortrommel **4** in einen hauptsächlich linken und einen hauptsächlich rechten Teil unterteilt wird. Auf diese Weise ist die Menge an Erntegut, die im Weiteren am Gutstromteiler **11** auf die beiden Zuführabschnitte **12, 13** aufzuteilen ist, reduziert. Hierdurch ist das Risiko eines unerwünschten Erntegutstaus im Bereich des Gutsromteilers **11** reduziert.

Wie in Zusammenschau der **Figuren 7** **und** **8** erkennbar ist, kann der Gutstromteiler **11** verschiedenartig ausgebildet sein. Während in **Figur 7** der Gutstromteiler **11** einem stumpfen Keil nachgebildet ist beziehungsweise ähnelt, verläuft der Gutstromteiler **11** gemäß **Figur 8** spitz zusammen und ist insgesamt länger ausgebildet. Die Varianten können für unterschiedliche Szenarien sinnvoll sein.

Der Erntegutstrom wird mittels des Gutstromteilers **11** entlang zweier Leitabschnitte **14, 15** aufgeteilt, was besonders gut in **Figur 7** erkennbar ist. Hierbei wird der Erntegutstrom somit entsprechend einer Form des Gutstromteilers **11** derart geführt, dass es jeweils zu dem Trennrotor **7, 8** geleitet wird. Mit anderen Worten wird das Erntegutstrom mittels des Gutstromteilers **11** zumindest im Wesentlichen in zwei Erntegutstromteile aufgeteilt, wobei jeweils einer der Erntegutstromteile jeweils einem der Trennrotoren **7, 8** zugeführt wird.

### Bezugszeichenliste

- 1: Mähdrescher
- 2: Drescheinrichtung
- 3: Trenneinrichtung
- 4: Vortrommel
- 5: Dreschtrommel
- 6: Abscheidekorb
- 7: Trennrotor
- 8: Trennrotor
- 9: Korbsegment
- 10: Einlaufkopf
- 11: Gutstromteiler
- 12: Zuführabschnitt
- 13: Zuführabschnitt
- 14: Leitabschnitt
- 15: Leitabschnitt
- 16: Ansatz
- 17: Mantelfläche
- 18: Leitelement
- 19: Leitelement
- 20: Leitelement
- 21: Zuführtrommel
- 22: Hordenschüttler
- 23: Schrägförderer
- 24: Häcksler
- 25: Schwenkachse
- 26: Welle
- 27: Welle
- 28: Schneidwerk

## Patentansprüche

1. Selbstfahrender Mähdrescher (1), umfassend
- eine tangentiale Drescheinrichtung (2) sowie
- eine axiale Trenneinrichtung (3),
wobei die Drescheinrichtung (2) eine tangentiale Vortrommel (4), eine in Strömungsrichtung eines Erntegutstroms der Vortrommel (4) nachgeschaltete tangentiale Dreschtrommel (5) sowie einen sowohl die Vortrommel (5) als auch die Dreschtrommel (5) zumindest bereichsweise ummantelnden Abscheidekorb (6) aufweist,
wobei die Trenneinrichtung (3) in Strömungsrichtung des Erntegutstroms betrachtet der Drescheinrichtung (2) nachgeschaltet ist und mindestens einen axialen Trennrotor (7, 8) umfasst,
**dadurch gekennzeichnet, dass**
der Abscheidekorb (6) in einem der Trenneinrichtung (3) zugewandten Endbereich ein Korbsegment (9) umfasst, das an ein der Drescheinrichtung (2) zugewandtes Ende eines Einlaufkopfs (10) der Trenneinrichtung (3) anschließt, sodass der Erntegutstrom von der Drescheinrichtung (2) unmittelbar an die Trenneinrichtung (3) übergebbar ist,
wobei der Einlaufkopf (10) mindestens einen in Querrichtung des Mähdreschers (1) betrachtet mittig angeordneten Gutstromteiler (11) umfasst, mittels dessen ein von der Drescheinrichtung (2) an die Trenneinrichtung (3) übergebener Erntegutstrom teilbar ist.

2. Mähdrescher (1) nach Anspruch 1, **dadurch gekennzeichnet, dass** sich der Gutstromteiler (11) bis an eine dem Abscheidekorb (6) zugewandten Rand des Einlaufkopfs (10) erstreckt.

3. Mähdrescher (1) nach einem der vorhergehenden Ansprüche, **dadurch gekennzeichnet, dass** der Einlaufkopf (10) zwei Zuführabschnitte (12, 13) aufweist, durch die hindurch der von der Drescheinrichtung (2) übernommene Erntegutstrom dem mindestens einen Trennrotor (7, 8) zuführbar ist.

4. Mähdrescher (1) nach Anspruch 3, **dadurch gekennzeichnet, dass** die Trenneinrichtung (3) zwei in Längsrichtung des Mähdreschers (1) betrachtet nebeneinander angeordnete axiale Trennrotoren (7, 8) umfasst, wobei die Zuführabschnitte (12, 13) des Einlaufkopfs (10) jeweils einem der Trennrotoren (7, 8) zugeordnet sind.

5. Mähdrescher (1) nach Anspruch 3 oder 4, **dadurch gekennzeichnet, dass** der Einlaufkopf (10) einen Gutstromteiler (11) aufweist, der mittig zwischen den Zuführabschnitten (12, 13) angeordnet ist, sodass der Erntegutstrom mittels des Gutstromteilers (11) zu den beiden Zuführabschnitten (12, 13) hin teilbar ist.

6. Mähdrescher (1) nach einem der vorhergehenden Ansprüche, **dadurch gekennzeichnet, dass** der Gutstromteiler (11) zumindest zwei in Strömungsrichtung des Erntegutstroms betrachtet aneinander anschließende Leitabschnitte (14 ,15) aufweist, wobei eine in Querrichtung des Mähdreschers (1) gemessene Breite des Gutstromteilers (11) in dessen erstem Leitabschnitt (14), der sich in Strömungsrichtung des Erntegutstroms betrachtet vor dem zweiten Leitabschnitt (15) befindet, zumindest im Wesentlichen, vorzugsweise vollständig, konstant ist und der Gutstromteiler (11) sich in seinem zweitem Leitabschnitt (15) in Strömungsrichtung betrachtet aufweitet.

7. Mähdrescher (1) nach einem der vorhergehenden Ansprüche, **dadurch gekennzeichnet, dass** mindestens ein Zuführabschnitt (12, 13) des Einlaufkopfs (10), vorzugsweise sämtliche Zuführabschnitte (12, 13), einen rohrförmigen Ansatz (16) aufweisen, an dessen innerer Mantelfläche (17) mindestens ein Leitelement (18, 19) zur gerichteten Führung eines Erntegutstroms angeordnet ist.

8. Mähdrescher (1) nach Anspruch 7, **dadurch gekennzeichnet, dass** das mindestens eine Leitelement (18, 19) sich zumindest über einen Teilumfangsbereich des Ansatzes (16) wendelförmig entlang der inneren Mantelfläche (17) erstreckt.

9. Mähdrescher (1) nach einem der vorhergehenden Ansprüche, **dadurch gekennzeichnet, dass** der Abscheidekorb (6) in seiner Ausrichtung relativ zu der Dreschtrommel (5) änderbar ist.

10. Mähdrescher (1) nach einem der vorhergehenden Ansprüche, **dadurch gekennzeichnet, dass** das Korbsegment (9) bündig an das der Drescheinrichtung (2) zugewandte Ende des Einlaufkopfs (10) anschließt.

11. Mähdrescher (1) nach einem der vorhergehenden Ansprüche, **dadurch gekennzeichnet, dass** die Vortrommel (4) mindestens ein Leitelement (20) umfasst, mittels dessen ein Erntegutstrom, der mittels der Vortrommel (4) verarbeitet wird, teilbar ist.
